# EUROPÄISCHE PATENTSCHRIFT

(11) **EP 3 328 569 B1**
(45) Veröffentlichungstag und Bekanntmachung des Hinweises auf die Patenterteilung: **04.12.2019**
(21) Anmeldenummer: 16736413.2
(22) Anmeldetag: 28.06.2016
(51) Int. Cl.: B21D 41/02, B62D 7/20, B60G 7/00

(54) **LENKSTANGE ODER SPURSTANGE MIT EINEM EINTEILIGEN VERBINDUNGSROHR**
STEERING ROD OR TRACK ROD HAVING A ONE-PIECE CONNECTING TUBE
BARRE DE DIRECTION OU BARRE DE CONNEXION MUNIE D'UN TUBE MONOBLOC DE RACCORDEMENT

(30) Priorität: 28.07.2015 DE 102015214248
(43) Veröffentlichungstag der Anmeldung: 06.06.2018
(73) Patentinhaber: ZF Friedrichshafen AG, 88046 Friedrichshafen (DE)
(72) Erfinder: REDDEHASE, Günter, 49448 Brockum (DE); EISMANN, Jens, 49326 Melle (DE)
(86) Internationale Anmeldenummer: PCT/EP2016/064900
(87) Internationale Veröffentlichungsnummer: WO 2017/016773

(56) Entgegenhaltungen:
- EP-A1- 2 712 745
- EP-A2- 1 205 319
- DE-A1- 10 351 463
- DE-A1- 19 900 264
- DE-A1-102006 040 072
- DE-A1-102010 040 419
- DE-A1-102012 018 189
- FR-A1- 2 521 919
- GB-A- 488 531
- GB-A- 2 069 945
- US-A- 3 583 052
- US-A- 4 138 141
- US-A- 5 059 053
- US-A1- 2006 108 783

## Beschreibung

Die Erfindung betrifft eine Lenk- oder Spurstange mit einem einteiligen Verbindungsrohr und ein Verfahren zur Herstellung einer solchen Lenkstange oder Spurstange gemäß den Oberbegriffen der Patentansprüche 1 und 12.

Verbindungsrohre, welche zwei Gelenkanbindungen einer Lenkstange oder einer Spurstange miteinander verbinden, sind aus dem Stand der Technik bekannt. Die DE 103 51 463 A1 offenbart ein Lenkgestänge, welches auch als Lenkstrang bezeichnet wird, eines Nutzfahrzeugs, insbesondere eines schweren Nutzfahrzeugs. Das Lenkgestänge weist eine Lenkstange, die auch als Lenkschubstange bezeichnet wird, und eine Spurstange auf. Die im Wesentlichen in Fahrzeuglängsrichtung ausgerichtete Lenkstange und die im Wesentlichen in Fahrzeugquerrichtung ausgerichtete Spurstange stehen über Hebelanordnungen in einer Wirkverbindung. Die Spurstange weist ein im Wesentlichen gerade ausgebildetes Verbindungsrohr auf. Die Lenkstange weist ein gekrümmt ausgebildetes Verbindungsrohr auf, um bei einem Lenkeinschlag eine Kollision mit einem benachbart angeordneten Fahrzeugrad zu vermeiden.

Aus der GB 488 531 A ist eine Lenkstange mit einem mehrteiligen Verbindungsrohr bekannt, wobei das Verbindungsrohr aus ineinander verschachtelten Rohrabschnitten gebildet ist.

Die DE 10 2006 040 072 A1 beschreibt ein Kraftfahrzeughohlprofil mit einer Schutzabdeckung, welche um ein innenhochdruckgeformtes Bauteil gebildet ist.

Im Einbauzustand können Lenkstangen oder Spurstangen mit einem geraden Verbindungsrohr Zug-, Druck- oder Knickbelastungen unterliegen oder auch einer Überlagerung mehrerer dieser Belastungsarten. Bei geraden Lenkstangen oder Spurstangen können beispielsweise bei einer Fahrt gegen einen Bordstein unter einem, bei Betrachtung in einer Draufsicht auf das Nutzfahrzeug, spitzen Winkel zwischen Fahrzeugrad und Bordstein hohe Radkräfte in das Lenkgestänge eingeleitet werden. In diesem Fall besteht die Gefahr eines Ausknickens des geraden Verbindungsrohres. In Übereinstimmung mit der Theorie des Knickens schlanker Stäbe nach Euler erfolgt dieses Ausknicken häufig etwa in der Mitte der Längserstreckung der Lenkstangen oder Spurstangen. Gekrümmt ausgebildete Lenkstangen oder Spurstangen können neben Zug-, Druck- oder Knickbelastungen auch Biegebelastungen ausgesetzt sein sowie einer Überlagerung mehrerer der vorgenannten Belastungsarten. In Abhängigkeit davon, ob es sich um eine gerade oder eine gekrümmte Lenkstange oder Spurstange handelt und welche, Belastungsart oder Belastungsarten jeweils vorliegen, können in den Lenkstangen oder Spurstangen über deren Längserstreckung unterschiedlich hohe mechanische Beanspruchungen vorliegen. Die Dimensionierung von Lenkstangen oder Spurstangen ist jeweils darauf ausgerichtet, ein Versagen in den Bereichen mit der maximalen Beanspruchung mit Sicherheit zu vermeiden. Daraus resultierend sind Lenkstangen oder Spurstangen häufig, bei Betrachtung über deren Längserstreckung, in weiten Teilen überdimensioniert ausgelegt und weisen daraus resultierend eine relativ hohe Masse auf.

Aufgabe der Erfindung ist es, eine Lenkstange oder eine Spurstange mit einem einteiligen Verbindungsrohr bereitzustellen, welches eine relativ geringe Masse aufweist und dennoch die auftretenden mechanischen Beanspruchungen sicher aufnehmen kann.

Diese Aufgabe wird gemäß der vorliegenden Erfindung gelöst durch eine Lenkstange oder Spurstange mit einem einteiligen Verbindungsrohr, welches zusätzlich die kennzeichnenden Merkmale des Patentanspruchs 1 aufweist.

Bevorzugte Ausführungsformen und Weiterbildungen sind Gegenstand der Unteransprüche.

Die Erfindung sieht demnach eine Lenkstange oder Spurstange, aufweisend ein einteiliges Verbindungsrohr, vor, wobei die Endabschnitte des Verbindungsrohres jeweils Teile von Gelenkanbindungen aufnehmen. Erfindungsgemäß ist das Verbindungsrohr durch zumindest einen kraftschlüssig mit dem Verbindungsrohr verbundenen Rohrabschnitt bereichsweise verstärkt, wobei der Rohrabschnitt mit seiner Außenwandung oder mit seiner Innenwandung vollflächig unter Ausbildung einer Pressverbindung an einer Wandung des Verbindungsrohres anliegt, wobei das Verbindungsrohr innerhalb eines gemeinsamen, von den Enden des Verbindungsrohres beabstandeten Verbindungsabschnitts radial umlaufend plastisch verformt ist, wobei das Verbindungsrohr in dem Verbindungsabschnitt gegenüber den nicht radial plastisch verformten Abschnitten einen vergrößerten Innen- und Außendurchmesser oder einen reduzierten Innen- und Außendurchmesser aufweist.

Die Längserstreckung des zumindest einen Rohrabschnitts ist dabei geringer als die Längserstreckung des Verbindungsrohres. Die zwei Gelenkanbindungen der Lenkstange oder der Spurstange sind an den Enden des Verbindungsrohres angeordnet. Das Verbindungsrohr und der Rohrabschnitt weisen vorzugsweise jeweils eine kreisringförmige Querschnittsfläche auf. Die Innendurchmesser und Außendurchmesser, die Querschnittsgeometrie sowie die Wandstärken von Verbindungsrohr und Rohrstück sind über deren Längserstreckung vorzugsweise konstant.

Die Übertragung einer Lenkbewegung von einem Lenkrad auf die Fahrzeugräder erfolgt bei Nutzfahrzeugen in der Regel über ein Lenkgestänge, welches jeweils zumindest eine Spurstange und eine Lenkstange aufweist. Die Spurstange im Sinne der Erfindung erstreckt sich in Einbaulage im Nutzfahrzeug zumindest im Wesentlichen in Fahrzeugquerrichtung und verbindet einen Spurhebel eines Radträgers einer ersten Fahrzeugseite mit dem Spurhebel des gegenüberliegenden Radträgers der anderen Fahrzeugseite. Die Lenkstange im Sinne der Erfindung erstreckt sich in Einbaulage im Nutzfahrzeug im Wesentlichen in Fahrzeuglängsrichtung und verbindet ein Lenkgetriebe, insbesondere einen Hebel eines Lenkgetriebes, mit einem Lenkhebel, welcher einem der beiden Radträger zugeordnet ist, die durch die Spurstange verbunden sind.

Bevorzugt weist die Lenkstange oder Spurstange zwei im Durchmesser reduzierte Endabschnitte mit jeweils einer Gelenkanbindung auf, wobei die Gelenkanbindungen bevorzugt als Kugelgelenke, insbesondere als Radialkugelgelenke, ausgebildet sind. Bei einer als Radialkugelgelenk ausgebildeten Gelenkanbindung nimmt der zugehörige Endabschnitt des Verbindungsrohres einen Schaft des Radialkugelgelenks auf. Der Schaft bildet somit den Anschlussbereich der an dem Ende des Verbindungsrohres angeordneten Gelenkanbindung. Der Schaft kann lösbar oder unlösbar mit dem Endabschnitt des Verbindungsrohres verbunden sein, wobei die unlösbar ausgeführte Verbindungsvariante bevorzugt formschlüssig ausgebildet ist, aber auch stoffschlüssig ausgeführt sein kann. Beispielsweise kann der Schaft lösbar über eine Gewindeverbindung mit dem Endabschnitt des Verbindungsrohres verbunden sein, wobei der Schaft vorzugsweise ein Außengewinde und der Endabschnitt des Verbindungsrohres ein korrespondierendes Innengewinde aufweist. Es ist allerdings auch eine Gewindeverbindung möglich, die zum Beispiel durch ein Verstemmen unlösbar ausgeführt ist. Alternativ kann der Schaft formschlüssig oder form- und kraftschlüssig über ein Rillenprofil unlösbar mit dem Endabschnitt des Verbindungsrohres verbunden sein. Das Rillenprofil erstreckt sich in diesem Fall formkorrespondierend in axialer Richtung von Schaft und Endabschnitt und weist in Axialrichtung gleichmäßig zueinander beabstandete Rillen auf. Die Rillen können umlaufend oder nicht umlaufend ausgebildet sein. Bei nicht umlaufend ausgebildeten Rillen erstrecken sich diese gemäß DE 102 23 306 A1 bei einer Betrachtung in einem Querschnitt durch den Schaft und den Endabschnitt vorzugsweise in zwei gleich großen, voneinander getrennt und gegenüberliegend angeordneten Umfangsabschnitten, die jeweils größer als ein Viertel und kleiner als die Hälfte des gesamten Umfangs ausgebildet sind.

Das dem Schaft zugeordnete Rillenprofil kann spanend oder spanlos, insbesondere durch Urformen oder Umformen hergestellt sein. Das Rillenprofil des Endabschnitts des Verbindungsrohres kann vorteilhaft bei eingeschobenem Schaft in Verbindung mit dem bereits fertiggestellten, formkorrespondierenden Rillenprofil des Schaftes durch einen Warmprägevorgang hergestellt werden. Der Warmprägevorgang, der auch als Warmeinschlagen bezeichnet wird, erfolgt bevorzugt mit zuvor erwärmtem Endabschnitt des Verbindungsrohres. Das Warmeinschlagen hat den Vorteil, dass ein besonders fester Sitz zwischen dem Endabschnitt des Verbindungsrohres und dem Schaft des Kugelgelenks erreicht wird, weil der den Schaft umschließende Endabschnitt des Verbindungsrohres nach dem Warmeinschlagen während des Abkühlens schrumpft und sich dadurch fest an den Schaft anlegt.

In einem Gehäuse des Radialkugelgelenks ist ein kugelförmiges Ende eines Kugelzapfens angeordnet, welcher sich im Wesentlichen rechtwinklig zu der Erstreckungsrichtung des Schaftes erstreckt. Aus diesem Grund werden Radialkugelgelenke häufig auch als Winkelkugelgelenke bezeichnet. Alternativ kann zumindest eine der beiden Gelenkanbindungen auch als Axialkugelgelenk ausgebildet sein. Vorteilhaft ist zumindest eine der beiden Gelenkanbindungen in axialer Richtung des Endabschnitts verlagerbar mit dem Verbindungsrohr verbunden, um eine Feinjustierung des Abstands der Gelenkanbindungen zueinander zu ermöglichen. Die Feinjustierung erfolgt dabei über eine Gewindeanordnung, die eine axiale Verlagerung des Schaftes relativ zu dem Endabschnitt des Verbindungsrohres ermöglicht. Nach der Feinjustierung kann die eingestellte Position der Gelenkanbindung relativ zu dem Verbindungsrohr durch eine den Endabschnitt des Verbindungsrohres umschließende Schelle gesichert werden. Der Endabschnitt des Verbindungsrohres weist bei dieser Ausgestaltung mehrere Längsschlitze auf, um eine Klemmung zu ermöglichen. Alternativ kann zur Feinjustierung auch ein Feineinstellsystem mit einer zwischen dem Endabschnitt des Verbindungsrohres und dem Schaft des Radialkugelgelenks angeordneten Justierhülse mit Innen- und mit Außengewinde gemäß DE 199 00 264 A1 verwendet werden. Eine andere Möglichkeit zur Sicherung der Position der Gelenkanbindung relativ zu dem Verbindungsrohr nach der Feinjustierung stellt die Verspannung des Außengewindes des Schaftes gegen das Innengewinde des Endabschnitts durch eine oder mehrere Kontermuttern dar.

Der zumindest eine Rohrabschnitt kann innerhalb des Verbindungsrohres angeordnet sein, wobei die Außenwandung des Rohrabschnitts vollflächig an der Innenwandung des Verbindungsrohres anliegt. Diese Anordnung hat den Vorteil, dass die stetig verlaufende Außenwandung des Verbindungsrohres gleichzeitig die Außenumfangsfläche der aus Verbindungsrohr und Rohrabschnitt gebildeten Baueinheit darstellt. Dies stellt einen Vorteil beim Transport und bei der Montage dar, weil bedingt durch die glatte Außenumfangsfläche eine geringere Verletzungsgefahr besteht. Der zumindest eine Rohrabschnitt kann alternativ auch außerhalb des Verbindungsrohres angeordnet sein, wobei bei dieser Ausgestaltung die Innenwandung des Rohrabschnitts vollflächig an der Außenwandung des Verbindungsrohres anliegt. Diese Ausgestaltung hat Vorteile bei der Herstellung und bei der Qualitätsprüfung der Baueinheit aus Verbindungsrohr und Rohrabschnitt, weil die Pressverbindung zwischen Verbindungsrohr und Rohrabschnitt gut zugänglich und einsehbar ist.

Das Verbindungsrohr weist über dessen Längserstreckung insbesondere eine geradlinige Erstreckung auf. Mit einer geradlinigen Erstreckung ist gemeint, dass eine gedachte Verbindungslinie zwischen den Mittellinien der Anschlussbereiche der zwei an den beiden Enden des Verbindungsrohres angeordneten Gelenkanbindungen deckungsgleich mit der Mittellinie des Verbindungsrohres ist. Das heißt, dass das Verbindungsrohr die geradlinige Erstreckung vollständig über dessen Längserstreckung aufweisen kann. Das bereichsweise Verstärken des Verbindungsrohres durch zumindest einen kraftschlüssig mit dem Verbindungsrohr verbundenen Rohrabschnitt erfolgt insbesondere in Abhängigkeit von den über die Längserstreckung des Verbindungsrohres vorliegenden Beanspruchungen. Gerade Verbindungsrohre zur Verbindung von zwei Gelenkanbindungen einer Lenkstange oder einer Spurstange können Zug-, Druck- oder Knickbelastungen unterliegen oder auch einer Überlagerung mehrerer dieser Belastungsarten. Gerade Verbindungsrohre zur Verbindung von zwei Gelenkanbindungen einer Lenkstange oder einer Spurstange sind nicht zur Übertragung von Drehmomenten und daraus resultierend zur Aufnahme von Torsionsbelastungen vorgesehen. Bei dem Verbindungsrohr mit geradliniger Längserstreckung ist der Rohrabschnitt vorzugsweise in der Mitte des Verbindungsrohres angeordnet, weil das Verbindungsrohr bei einer Überbeanspruchung durch in Längsrichtung des Verbindungsrohres einwirkende Druckkräfte häufig in diesem mittleren Bereich durch Ausknicken versagt. Die Verstärkung des mittleren Bereichs durch einen kraftschlüssig mit dem Verbindungsrohr verbundenen Rohrabschnitt erfolgt wiederum derart, dass der Rohrabschnitt mit seiner Außenwandung oder mit seiner Innenwandung vollflächig unter Ausbildung einer Pressverbindung an der Innenwandung oder an der Außenwandung des mittleren Bereichs des geraden Verbindungsrohres anliegt. Auf diese Weise wird das für die Theorie des Knickens schlanker Stäbe nach Euler relevante Flächenträgheitsmoment, welches auch als Flächenmoment 2. Grades bezeichnet wird, erhöht und damit auch die Sicherheit gegen Ausknicken in dem mittleren Bereich des geraden Verbindungsrohres.

Die partielle Verstärkung von Bereichen des Verbindungsrohres mit hohen Beanspruchungen durch einen oder mehrere Rohrabschnitte hat den Vorteil, dass das Verbindungsrohr vergleichsweise leicht ausgeführt werden kann, weil sich dessen Querschnittsgeometrie nicht an der Maximalbelastung des Verbindungsrohres orientieren muss. Dadurch ist eine Reduzierung der Masse des Verbindungsrohres möglich, die sich aufgrund der relativ großen Querschnittsfläche und der relativ großen Bauteillänge insbesondere bei Lenkstangen oder Spurstangen für Nutzkraftfahrzeuge wie beispielsweise Lastkraftwagen und Omnibusse besonders deutlich auswirkt. Bedingt durch den geringeren Materialeinsatz ist ebenfalls eine Reduzierung der Herstellungskosten möglich. Die zusätzliche Masse durch den oder die Rohrabschnitte ist wesentlich geringer als die Reduzierung der Masse des Verbindungsrohres durch die zuvor beschriebene Maßnahme. Somit kann das sogenannte Leergewicht des Nutzfahrzeugs reduziert und damit die mögliche Zuladung durch Passagiere oder Fracht erhöht werden, was neben einem weiteren wirtschaftlichen Vorteil auch einen Umweltvorteil infolge eines reduzierten CO₂-Ausstoßes mit sich bringt.

Gemäß einer alternativen Ausgestaltung der Erfindung weist das Verbindungsrohr eine von einer geradlinigen Erstreckung abweichende Erstreckung auf. Mit einer von einer geradlinigen Erstreckung abweichenden Erstreckung ist gemeint, dass eine gedachte Verbindungslinie zwischen den Mittellinien der Anschlussbereiche der zwei an den beiden Enden des Verbindungsrohres angeordneten Gelenkanbindungen nicht vollständig deckungsgleich mit der Mittellinie des Verbindungsrohres ist. Das Verbindungsrohr kann die von einer geradlinigen Erstreckung abweichende Erstreckung vollständig über dessen Längserstreckung oder in einem Teilabschnitt oder in mehreren Teilabschnitten aufweisen. Der oder die Bereiche mit der von einer geradlinigen Erstreckung abweichenden Erstreckung können eine gleichmäßig stetige Krümmung oder unterschiedliche Krümmungsradien aufweisen. Der oder die Bereiche mit der von einer geradlinigen Erstreckung abweichenden Erstreckung können zweidimensional in einer einzigen Ebene liegen oder dreidimensional in mehreren Ebenen angeordnet sein. Verbindungsrohre zur Verbindung von zwei Gelenkanbindungen einer Lenkstange oder einer Spurstange sind zur Vermeidung von Kollisionen mit anderen Bauteilen, wie beispielsweise lenkbaren Fahrzeugrädern, oftmals konstruktionsbedingt gebogen, gekröpft oder in anderer Weise gekrümmt ausgebildet.

Die Innendurchmesser und Außendurchmesser, die Querschnittsgeometrie sowie die Wandstärken von Verbindungsrohr und Rohrstück sind auch bei dieser Ausgestaltung über deren Längserstreckung vorzugsweise konstant. Bei dem Verbindungsrohr kann es diesbezüglich in den Bereichen, in denen es die von einer geradlinigen Erstreckung abweichende Erstreckung aufweist, zu geringfügigen Abweichungen kommen. Diese Abweichungen sind herstellungsbedingt und treten insbesondere auf, wenn ein relativ kleiner Krümmungsradius vorliegt und die Krümmung durch Biegen des Verbindungsrohres hergestellt wird. Das Verbindungsrohr stellt bei theoretischer Betrachtung einen gekrümmten Stab mit, je nach konstruktiver Ausgestaltung, mehr oder weniger stark ausgeprägter Krümmung dar, welcher Stab an beiden Enden gelenkig gelagert ist. Infolgedessen können als Belastungsarten Zug, Druck, Biegung und Knickung auftreten. Torsionsbelastungen können nicht auftreten.

Bevorzugt ist der Rohrabschnitt im Bereich eines Krümmungsabschnitts des Verbindungsrohres angeordnet. Insbesondere bei Verbindungsrohren, welche eine deutlich von einer geradlinigen Erstreckung abweichende Erstreckung aufweisen und in die endseitig höhere Zug- oder Druckkräfte eingeleitet werden, tritt in den Krümmungsabschnitten eine relativ hohe Biegebeanspruchung auf. Im Bereich dieser Krümmungsabschnitte des Verbindungsrohres angeordnete Rohrabschnitte bewirken, dass die vorgenannten Belastungsspitzen sicher aufgenommen werden können. Dadurch werden unzulässige Verformungen des Verbindungsrohres vermieden, die zu einer unbeabsichtigten Spurverstellung und dadurch bedingten erhöhten Reifenverschleiß führen könnten.

In vorteilhafter Weiterbildung der Erfindung ist der Rohrabschnitt innerhalb eines gemeinsamen, von den Enden des Verbindungsrohres beabstandeten Verbindungsabschnitts radial umlaufend plastisch verformt. Die radial umlaufende plastische Verformung der beiden Fügepartner Verbindungsrohr und Rohrabschnitt ist vorteilhaft, um den Rohrabschnitt mit seiner Außenwandung oder mit seiner Innenwandung vollflächig unter Ausbildung der Pressverbindung an der Innenwandung oder der Außenwandung des Verbindungsrohres zur Anlage zu bringen. Theoretisch wäre es auch vorstellbar, die Durchmessertoleranzen von Verbindungsrohr und Rohrabschnitt derart auszulegen, dass zwischen dem Verbindungsrohr und dem Rohrabschnitt zur Erreichung der Pressverbindung eine Presspassung vorgesehen ist. Dies wäre allerdings nur mit einem hohen Herstellungsaufwand umsetzbar und daher unwirtschaftlich. Auch eine Herstellung der Pressverbindung durch Aufschrumpfen nach vorherigem Erwärmen des Fügepartners mit dem größeren Durchmesser auf den anderen Fügepartner, der vor dem Fügen zusätzlich abgekühlt werden kann, ist allenfalls mit erhöhtem Aufwand umsetzbar.

Daher weisen die beiden Fügepartner Verbindungsrohr und Rohrabschnitt in Bezug auf die sich jeweils nach Ausbildung der Pressverbindung berührende Außen- und Innenumfangsfläche im Ausgangszustand vorzugsweise eine Spielpassung auf. Zur Herstellung der Pressverbindung wird der Fügepartner Verbindungsrohr zur Überbrückung des durch die Spielpassung gebildeten umlaufenden Ringspalts zwischen Verbindungsrohr und Rohrabschnitt innerhalb des gemeinsamen, von den Enden des Verbindungsrohres beabstandeten Verbindungsabschnitts plastisch verformt. Der andere der beiden Fügepartner, welcher vorzugsweise eine relativ enge Durchmessertoleranz aufweist, die insbesondere größenordnungsmäßig im Bereich des elastischen Formänderungsvermögens des anderen der beiden Fügepartner liegt, wird dabei nur elastisch verformt. In dem Verbindungsabschnitt kann der Rohrabschnitt innerhalb des Verbindungsrohres angeordnet sein und nach seiner radial umlaufenden plastischen Verformung durch Aufweiten vollflächig an der Innenwandung des Verbindungsrohres unter Ausbildung der Pressverbindung anliegen oder das Verbindungsrohr wird durch radial umlaufende plastische Verformung innerhalb des Verbindungsabschnitts im Durchmesser reduziert und an der Außenwandung des Rohrabschnitts vollflächig zur Anlage gebracht. Alternativ kann der Rohrabschnitt im Ausgangszustand vor der Herstellung der Pressverbindung konzentrisch zu dem und außerhalb des Verbindungsrohres angeordnet sein und entweder der Rohrabschnitt durch eine Durchmesserreduzierung oder das Verbindungsrohr durch eine Aufweitung innerhalb des gemeinsamen Verbindungsabschnitts bei dem jeweils anderen Fügepartner vollflächig zur Anlage gebracht werden.

Gemäß der Ausgestaltung nach Unteranspruch 5 der Erfindung sind das Verbindungsrohr und der Rohrabschnitt innerhalb eines gemeinsamen, von den Enden des Verbindungsrohres beabstandeten Verbindungsabschnitts radial umlaufend plastisch verformt. In Abhängigkeit von den Durchmessertoleranzen des Verbindungsrohres und/oder des Rohrabschnitts kann es sein, wie zuvor beschrieben, dass die radial umlaufende plastische Verformung nur eines der beiden Fügepartner Verbindungsrohr oder Rohrabschnitt ausreichend ist. Zur bereichsweisen Verstärkung des Verbindungsrohres durch den zumindest einen kraftschlüssig mit dem Verbindungsrohr verbundenen Rohrabschnitt, ist dabei der andere Fügepartner von Verbindungsrohr und Rohrabschnitt nur elastisch verformt. Das Verbindungsrohr und auch den Rohrabschnitt innerhalb des gemeinsamen, von den Enden des Verbindungsrohres beabstandeten Verbindungsabschnitts radial umlaufend plastisch zu verformen, ist bei größeren Durchmessertoleranzen sowohl des Verbindungsrohres als auch des Rohrabschnitts vorteilhaft. Auf diese Weise wird innerhalb der Spannweite von theoretisch kleinstmöglichem bis theoretisch größtmöglichem Spiel zwischen den Fügepartnern Verbindungsrohr und Rohrabschnitt das Verbindungsrohr sicher durch den zumindest einen kraftschlüssig mit dem Verbindungsrohr verbundenen Rohrabschnitt bereichsweise unter Ausbildung einer Pressverbindung verstärkt. Das Verbindungsrohr weist in dem Verbindungsabschnitt gegenüber den nicht radial umlaufend plastisch verformten Abschnitten einen vergrößerten Innen- und Außendurchmesser oder einen reduzierten Innen- und Außendurchmesser auf. Der Übergang von den nicht radial umlaufend plastisch verformten Abschnitten des Verbindungsrohres zu dem Verbindungsabschnitt des Verbindungsrohres ist vorzugsweise umlaufend konisch ausgebildet. Der Verbindungsabschnitt erstreckt sich mindestens über die Länge des Krümmungsabschnitts. Der Verbindungsabschnitt kann sich auch einseitig oder beidseitig über den Krümmungsabschnitt hinaus in Richtung der Enden des Verbindungsrohres erstrecken. In diesem Fall wird neben einem gekrümmt ausgebildeten Bereich des Verbindungsrohres zusätzlich auch zumindest ein sich an den gekrümmten Bereich anschließender Bereich mit einer geradlinigen Erstreckung verstärkt.

Vorteilhaft weisen die Werkstoffe des Verbindungsrohres und des Rohrabschnitts unterschiedliche Fließgrenzen auf. Die Fließgrenze, welche in der Regel in N/mm² oder MPa angegeben wird, ist ein Werkstoffkennwert und bezeichnet diejenige Spannung, bis zu der ein Werkstoff bei einer Beanspruchung keine dauerhafte plastische Verformung zeigt. Bei Unterschreiten der Fließgrenze kehrt das Material nach Entlastung elastisch in seine ursprüngliche Form zurück, bei Überschreiten verbleibt dagegen eine plastische Formveränderung. Bei einer Zugbeanspruchung, wie sie vorliegt, wenn das Verbindungsrohr und/oder der Rohrabschnitt aufgeweitet werden, wird die Fließgrenze als Streckgrenze bezeichnet. Im Zusammenhang mit einer Druckbeanspruchung, wie sie vorliegt, wenn das Verbindungsrohr und/oder der Rohrabschnitt im Durchmesser reduziert werden, wird die Fließgrenze als Quetschgrenze bezeichnet.

Das Wirkprinzip der kraftschlüssigen Verbindung von Verbindungsrohr und Rohrabschnitt unter Ausbildung einer Pressverbindung beruht auf unterschiedlichen Fließgrenzen der Fügepartner Verbindungsrohr und Rohrabschnitt. Der Rohrabschnitt liegt in dem Verbindungsabschnitt nach der Ausbildung der Pressverbindung mit seiner Außenwandung oder mit seiner Innenwandung vollflächig an der Innenwandung oder an der Außenwandung des Verbindungsrohres an. Zuvor wurden entweder das Verbindungsrohr oder der Rohrabschnitt elastisch bis an dessen Fließgrenze und der andere der beiden Fügepartner über dessen Fließgrenze hinaus belastet. Alternativ wurden beide Fügepartner zuvor über deren jeweilige Fließgrenze belastet. Da die vorgenannten Belastungen entweder nur eine elastische oder eine elastische und eine plastische Verformung von Verbindungsrohr und/oder Rohrabschnitt bewirken, erfolgt bei einer Aufhebung der Belastung jeweils eine Rückfederung um den Betrag des elastischen Verformungsanteils. Damit die Pressverbindung zwischen Rohrabschnitt und Verbindungsrohr zustande kommen kann, muss der Werkstoff einer der beiden Fügepartner eine höhere Fließgrenze, also eine höhere Elastizität, aufweisen.

Um beispielsweise bei einer Anordnung mit einem die Außenwandung des Verbindungsrohres umgebenden Rohrabschhitt die gewünschte Pressverbindung durch Aufweiten der beiden Fügepartner realisieren zu können, muss der Werkstoff des Rohrabschnitts eine höhere Streckgrenze aufweisen als der Werkstoff des Verbindungsrohres. Während des Aufweitens erfährt zumindest das Verbindungsrohr eine Verformung mit einem elastischen und einem plastischen Anteil. Nach Rücknahme der für das Aufweiten erforderlichen Umformkraft reduziert sich der Außendurchmesser des Verbindungsrohres um den elastischen Anteil der Verformung. Der Rohrabschnitt wird während des Aufweitens des Verbindungsrohres entweder nur elastisch oder elastisch und plastisch, also über die Streckgrenze hinaus, belastet. Nach Rücknahme der für das Aufweiten erforderlichen Umformkraft reduziert sich ebenfalls der Innendurchmesser des Rohrabschnitts. Bedingt durch die höhere Streckgrenze des Rohrabschnitt-Werkstoffs gegenüber dem Verbindungsrohr-Werkstoff federt der Rohrabschnitt innerhalb des Verbindungsabschnitts nach Rücknahme der für das Aufweiten erforderlichen Umformkraft stärker zurück als das Verbindungsrohr. Der Innendurchmesser des Rohrabschnitts würde sich nach Rücknahme der für das Aufweiten erforderlichen Umformkraft also stärker verringern als der vollflächig anliegende Außendurchmesser des Verbindungsrohres, wenn der Rohrabschnitt nicht durch die geringere Rückfederung des Verbindungsrohres an einer vollständigen Entspannung gehindert werden würde. Auf diese Weise wird eine Klemmwirkung hervorgerufen, die in dem Verbindungsabschnitt zu einer kraftschlüssigen Verbindung des Verbindungsrohres mit dem Rohrabschnitt unter Ausbildung einer Pressverbindung führt.

Das Verbindungsrohr und der Rohrabschnitt sind vorzugsweise aus dem gleichen Werkstoff, insbesondere Stahl, gebildet. Die Werkstoffe der Fügepartner Verbindungsrohr und Rohrabschnitt werden vorzugsweise gleichartig ausgewählt, um ein Lockern oder Lösen der Pressverbindung zwischen den Fügepartnern Verbindungsrohr und Rohrabschnitt unter Temperatureinfluss zu vermeiden. Bei einer Verwendung unterschiedlicher Werkstoffe für Verbindungsrohr und Rohrabschnitt könnte es in Abhängigkeit von den Wärmeausdehnungskoeffizienten der gewählten Werkstoffe bei Temperaturen oberhalb oder unterhalb der Temperatur, die beim Fügen von Verbindungsrohr und Rohrabschnitt vorlag, zu einer Lockerung oder Aufhebung der Pressverbindung zwischen den beiden Fügepartnern kommen.

Gemäß einer bevorzugten Ausgestaltung der Erfindung weist der Werkstoff des Verbindungsrohres eine höhere Streckgrenze auf als der Werkstoff des Rohrabschnitts. Die kraftschlüssige Pressverbindung kann in diesem Fall erreicht werden, wenn der Rohrabschnitt innerhalb des Verbindungsrohres angeordnet ist und beide Fügepartner gemeinsam aufgeweitet werden. Diese Ausgestaltung ist insbesondere dann vorteilhaft, wenn der Rohrabschnitt im Bereich eines Krümmungsabschnitts des Verbindungsrohres angeordnet ist, weil durch den innenliegenden Rohrabschnitt die Außenwandung des Verbindungsrohres zumindest im Wesentlichen glatt ausgebildet ist und somit das Biegen des Verbindungsrohres zur Erzeugung des Krümmungsabschnitts vereinfacht wird. Die Streckgrenze des Verbindungsrohr-Werkstoffes kann dabei beispielsweise einen Wert von 460 MPa und die des Rohrabschnitt-Werkstoffes einen Wert von 355 MPa aufweisen. Die Differenz der beiden Streckgrenzenwerte beträgt demnach 105 MPa. Durch Werkstoffpaarungen, welche eine noch höhere Differenz der beiden Streckgrenzenwerte aufweisen, kann die Prozesssicherheit bei der Ausbildung der kraftschlüssigen Pressverbindung weiter erhöht werden. Je höher die Streckgrenzendifferenz ausgebildet ist, desto höher ist die Differenz der theoretischen Rückfederungswege nach dem Fügen der Pressverbindung, wenn sich die Fügepartner Verbindungsrohr und Rohrabschnitt theoretisch vollständig um den jeweiligen elastischen Verformungsanteil entspannen könnten. Nach dem Aufweiten des Verbindungsrohres und des Rohrabschnitts innerhalb des Verbindungsabschnitts und der anschließenden Rücknahme der für das Aufweiten angewandten Fügekraft federt der Rohrabschnitt im Durchmesser um einen geringeren Betrag zurück als das Verbindungsrohr zurückfedern würde, wenn es bei der Ausbildung der Pressverbindung mit dem Rohrabschnitt nicht an einer vollständigen Entspannung gehindert werden würde. Man könnte bei dem Differenzweg, den der Rohrabschnitt bei seiner Entlastung nach dem Fügen zurücklegt und den das Verbindungsrohr zurücklegen würde, wenn es nicht durch den Rohrabschnitt daran gehindert werden würde, von einer Überdeckung sprechen. Eine relativ hohe Überdeckung in diesem Sinne ist insbesondere dann vorteilhaft, wenn der Rohrabschnitt in einem Krümmungsabschnitt des Verbindungsrohres angeordnet ist, weil im Rahmen der Herstellung des Krümmungsabschnitts durch eine plastische Umformung der Betrag der Überdeckung bereichsweise reduziert werden könnte. Weist der Werkstoff des Verbindungsrohres eine höhere Streckgrenze auf als der Werkstoff des Rohrabschnitts, kann die kraftschlüssige Pressverbindung alternativ auch erreicht werden, wenn der Rohrabschnitt das Verbindungsrohr umschließt und beide Fügepartner gemeinsam im Durchmesser reduziert werden.

Bevorzugt weist der Rohrabschnitt eine geringere Wandstärke auf als das Verbindungsrohr. Der Rohrabschnitt dient dazu, Belastungsspitzen im Verlauf des Verbindungsrohres aufzunehmen. Daher ist es ausreichend, den Rohrabschnitt mit einer Wandstärke auszuführen, die geringer ist als die Wandstärke des Verbindungsrohres. Der Hauptteil der auftretenden Belastungen wird durch das Verbindungsrohr übertragen. Die Längserstreckung des zumindest einen Rohrabschnitts ist geringer, insbesondere erheblich geringer, als die Längserstreckung des Verbindungsrohres. Wenn der Rohrabschnitt im Bereich eines Krümmungsabschnitts des Verbindungsrohres angeordnet ist, wird durch die gegenüber dem Verbindungsrohr geringere Wandstärke des Rohrabschnitts das Biegen des Verbindungsrohres zur Erzeugung des Krümmungsabschnitts vereinfacht. Das Verbindungsrohr weist in Bezug auf Innen- und Außendurchmesser sowie Wandstärke bevorzugt Standardabmessungen auf, weil Rohrmaterial mit Standardabmessungen günstiger zu beziehen ist als solches mit Sonderabmessungen und weil aufgrund der gegenüber dem Rohrabschnitt größeren Länge ein höherer Bedarf besteht. Falls erforderlich, wird Rohrmaterial mit Sonderabmessungen aufgrund des geringeren Bedarfs bevorzugt für den Rohrabschnitt verwendet.

Gemäß einer Weiterbildung der Erfindung ist zumindest ein Endabschnitt des Verbindungsrohres im Durchmesser reduziert ausgebildet. Der im Durchmesser reduzierte Endabschnitt dient der Anbindung des Verbindungsrohres an ein Anschlussbauteil. Der Endabschnitt ist nicht durch einen Rohrabschnitt verstärkt ausgebildet und kann eine Außenumfangsfläche nach Art einer Zylindermantelfläche aufweisen. Das Verbindungsrohr weist zu dem zumindest einen im Durchmesser reduzierten Endabschnitt einen vorzugsweise umlaufend konisch ausgebildeten Übergang auf. Der Verbindungsabschnitt und der Endabschnitt sind bevorzugt voneinander beabstandet. Der im Durchmesser reduzierte Endabschnitt kann ein Innengewinde aufweisen, welches sich insbesondere über die komplette Länge des Endabschnitts erstreckt. Der Endabschnitt kann darüber hinaus einen oder mehrere Längsschlitze aufweisen, die in Verbindung mit einer Schelle zur radialen Klemmung des Endabschnitts geeignet sind. Bevorzugt sind zwei diametral gegenüberliegende Längsschlitze vorgesehen, die die Zylindermantelfläche des Endabschnitts in einer Ebene in axialer Richtung durchsetzen. Derartig ausgebildete Längsschlitze können günstig in einem Arbeitsgang durch Sägen hergestellt werden. Der dem im Durchmesser reduzierten Endabschnitt gegenüberliegende Endabschnitt des Verbindungsrohres kann unter Beibehaltung der ursprünglichen Ausgangsform abgelängt oder ebenfalls im Durchmesser reduziert ausgebildet sein.

Vorteilhaft sind das Verbindungsrohr und/oder der Rohrabschnitt als nahtlos kaltgezogene Stahlrohre ausgebildet. Die Verwendung von nahtlos kaltgezogenen Stahlrohren als Ausgangsmaterial für das Verbindungsrohr und/oder den Rohrabschnitt ist insbesondere von Vorteil, wenn beide Fügepartner in dem Verbindungsabschnitt zur Erzeugung einer kraftschlüssigen Pressverbindung aufgeweitet werden. Die bei dem Aufweiten in dem Verbindungsrohr und dem Rohrabschnitt auftretende Zugbeanspruchung kann besonders gut von Rohren aufgenommen werden, deren Umfang nicht durch eine Naht geschwächt ist. Vorteilhaft können nahtlos kaltgezogene Präzisionsstahlrohre nach EN 10305-1 verwendet werden, die einer Wärmebehandlung durch Normalglühen unterzogen wurden. Das Normalglühen dient dazu, beispielsweise durch eine Kaltverfestigung während des Kaltziehens hervorgerufene Gefügeungleichmäßigkeiten zu beseitigten. Auf diese Weise kann gezielt ein feinkörniges, gleichmäßiges Gefüge mit guten Verformbarkeitseigenschaften als Ausgangsbasis für das Aufweiten von Verbindungsrohr und Rohrabschnitt erzielt werden.

Gemäß einer alternativen Ausgestaltung sind das Verbindungsrohr und/oder der Rohrabschnitt als längsnahtgeschweißte Stahlrohre ausgebildet. Die Verwendung von relativ kostengünstigen, längsnahtgeschweißten Stahlrohren als Ausgangsmaterial für das Verbindungsrohr und/oder den Rohrabschnitt kommt insbesondere in Frage, wenn beide Fügepartner in dem Verbindungsabschnitt zur Erzeugung einer kraftschlüssigen Pressverbindung gestaucht werden. Eine Wärmebehandlung durch Glühen kann die Verarbeitungseigenschaften der längsnahtgeschweißten Stahlrohre verbessern. Auch bei einer Ausgestaltung mit einem im Bereich eines Krümmungsabschnitts des Verbindungsrohres angeordneten Rohrabschnitt kommen längsnahtgeschweißte Stahlrohre als Ausgangsmaterial in Frage, insbesondere bei einem relativ großen Krümmungsradius. In diesem Fall ist darauf zu achten, dass die Längsschweißnaht im Bereich der neutralen Faser liegt. Die neutrale Faser bezeichnet die Schicht eines Biegequerschnitts, deren Länge sich bei einem Biegevorgang nicht ändert. Dort verursacht die Biegung keine Zug- oder Druckspannungen. Neben längsnahtgeschweißten Stahlrohren sind auch spiralnahtgeschweißte Stahlrohre als Ausgangsmaterial für das Verbindungsrohr und/oder den Rohrabschnitt geeignet.

Die Erfindung bezieht sich darüber hinaus auf ein Verfahren zur Herstellung einer Lenkstange oder Spurstange wie zuvor beschrieben, wobei zunächst ein Rohrhalbzeug des Rohrabschnitts innerhalb eines Rohrhalbzeugs des Verbindungsrohres positioniert wird und anschließend beide Rohrhalbzeuge innerhalb des Verbindungsabschnitts durch einen sich in der gemeinsamen Axialrichtung der beiden Rohrhalbzeuge bewegenden Dorn mit einem Übermaß aufgeweitet werden. Auf diese Weise wird eine kraftschlüssige Pressverbindung zwischen den beiden Fügepartnern geschaffen. Mit einem Rohrhalbzeug des Rohrabschnitts bzw. des Verbindungsrohres ist in diesem Zusammenhang das Ausgangsmaterial für den Rohrabschnitt bzw. für das Verbindungsrohr gemeint. Vorzugsweise handelt es sich dabei um nahtlos kaltgezogene Stahlrohre mit geradliniger Erstreckung, die jeweils auf die erforderliche Einsatzlänge zugeschnitten sind. Das Positionieren des Rohrhalbzeugs des Rohrabschnitts in dem Rohrhalbzeug des Verbindungsrohres erfolgt vorteilhaft durch einen innerhalb des Rohrhalbzeugs des Verbindungsrohres verschiebbaren Gegenhalter, welcher als Anschlag wirkt. Zwischen dem Rohrhalbzeug des Rohrabschnitts und dem Rohrhalbzeug des Verbindungsrohres besteht vorzugsweise eine Spielpassung mit einem relativ geringen Spiel, damit beide Fügepartner ohne großen Kraftaufwand relativ zueinander bewegt werden können.

Die Aufweitung des Rohrhalbzeugs des Rohrabschnitts und das Rohrhalbzeugs des Verbindungsrohres innerhalb des Verbindungsabschnitts durch einen sich in der gemeinsamen Axialrichtung der beiden Rohrhalbzeuge bewegenden Dorn mit einem Übermaß erfolgt vorzugsweise in Axialrichtung fortschreitend. Mit einem Übermaß ist in diesem Zusammenhang gemeint, dass der Dorn einen Außendurchmesser von beispielsweise 38 Millimeter aufweist, der größer ist als der Innendurchmesser des Rohrhalbzeugs des Rohrabschnitts vor dem Aufweiten, welcher beispielsweise 37 Millimeter beträgt. Sein Übermaß weist der Dorn bevorzugt nicht über dessen gesamte Längserstreckung in Axialrichtung auf, sondern lediglich in einem relativ kleinen Bereich seiner Längserstreckung, welcher als ringförmig umlaufende Formwulst ausgebildet ist. Auf diese Weise kann die für das Aufweiten erforderliche Umformkraft relativ gering gehalten werden. Über seine restliche Längserstreckung weist der Dorn umfangsseitig im Wesentlichen eine umlaufende Freimachung zur Verminderung der Reibung zwischen dem Dorn und der Innenwandung des Rohrhalbzeugs des Rohrabschnitts auf.

Durch die Aufweitung innerhalb des Verbindungsabschnitts wird das Rohrhalbzeug des Rohrabschnitts zu dem Rohrabschnitt und das Rohrhalbzeug des Verbindungsrohres zu dem Verbindungsrohr. Im Rahmen der Aufweitung von Rohrabschnitt und Verbindungsrohr kann das Verbindungsrohr elastisch oder plastisch verformt werden. Vorzugsweise erfolgt die Aufweitung bei innenliegendem Rohrabschnitt derart, dass das Verbindungsrohr innerhalb des Verbindungsabschnitts eine bleibende plastische Verformung verbunden mit einer geringfügigen Erhöhung des Außendurchmessers aufweist. In diesem Fall sind die Innen- und Außendurchmesser von Rohrabschnitt und Verbindungsrohr innerhalb des Verbindungsabschnitts größer als außerhalb des Verbindungsabschnitts. Durch diese Vorgehensweise wird erreicht, dass im Falle eines Versagens der kraftschlüssigen Pressverbindung zwischen den Fügepartnern Verbindungsrohr und Rohrabschnitt eine formschlüssige Lagesicherung wirkt, welche den Rohrabschnitt innerhalb des Verbindungsrohres in Axialrichtung in Position hält.

Vorzugsweise wird zumindest ein Endabschnitt des Verbindungsrohres im Durchmesser reduziert, wobei die Durchmesserreduzierung durch eine sich in Axialrichtung des Verbindungsrohres bewegende Matrize mit einem konischen Einlauf erfolgt, welche Matrize sich über den Außenumfang des Verbindungsrohres schiebt. Die Matrize weist auf ihrer dem Verbindungsrohr zugewandten Seite einen konischen Einlauf mit einem Öffnungswinkel von vorzugsweise 12 bis 15 Grad auf. Das Aufschieben der Matrize über den endseitigen Außenumfang des Verbindungsrohres kann erfolgen, nachdem der Dorn aus dem Verbindungsrohr herausgezogen wurde. Vorteilhaft erfolgt das Aufschieben der Matrize mit in dem Verbindungsrohr eingetauchten Dorn, wobei der Dorn in dem Bereich, in dem sich die Matrize auf das Verbindungsrohr aufschiebt, einen Außendurchmesser aufweist, der dem Innendurchmesser des im Durchmesser reduzierten Endabschnitts entspricht. Auf diese Weise kann einem Ausknicken des Verbindungsrohres während des Aufschiebens der Matrize entgegengewirkt werden.

Vorteilhaft erfolgt die Durchmesserreduzierung des Verbindungsrohres in derselben Aufspannung wie die Aufweitung des Rohrhalbzeugs des Rohrabschnitts und des Rohrhalbzeugs des Verbindungsrohres. Dies ist gegenüber separaten Arbeitsgängen besonders günstig, wenn das Aufschieben der Matrize mit in dem Verbindungsrohr eingetauchten Dorn, wie zuvor beschrieben, erfolgt. Je nach Ausgestaltung des Verbindungsrohres kann anschließend ein Krümmungsabschnitt durch Biegen des Verbindungsrohres hergestellt werden.

Im Folgenden wird die Erfindung anhand lediglich Ausführungsbeispiele darstellender Zeichnungen näher erläutert, wobei sich gleiche Bezugszeichen auf gleiche Bauteile oder Elemente beziehen. Dabei zeigt:
- Fig. 1: in einer perspektivischen Darstellung eine Vorderachse eines Nutzfahrzeugs mit Lenkungskomponenten gemäß dem Stand der Technik;
- Fig. 2: in einer Schnittdarstellung eine Lenkstange mit einem gekrümmten Verbindungsrohr gemäß einer ersten Ausführungsform der Erfindung;
- Fig. 3: eine vergrößerte, nicht maßstäbliche Detailansicht der Einzelheit X aus Figur 2;
- Fig. 4: in einer teilweise geschnittenen Darstellung eine Lenkstange mit einem gekrümmten Verbindungsrohr gemäß einer zweiten Ausführungsform der Erfindung;
- Fig. 5: eine schematische Darstellung eines Verfahrens zur Herstellung eines Verbindungsrohres einer Lenkstange gemäß einer dritten Ausführungsform;
- Fig. 6: eine vergrößerte Detailansicht der Einzelheit Y aus Figur 5.

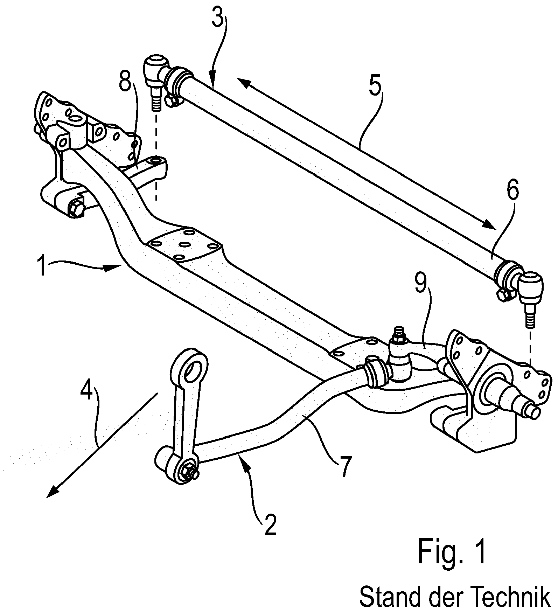

Fig. 1 zeigt eine aus dem Stand der Technik bekannte Vorderachse 1 eines Nutzfahrzeugs mit einem Lenkgestänge, welches eine Lenkstange 2 und eine Spurstange 3 aufweist. Die im Wesentlichen in Fahrzeuglängsrichtung 4 ausgerichtete Lenkstange 2 und die im Wesentlichen in Fahrzeugquerrichtung 5 ausgerichtete Spurstange 3 stehen über Hebelanordnungen in einer Wirkverbindung. Die Spurstange 3 weist ein gerade ausgebildetes Verbindungsrohr 6 auf. Die Lenkstange 2 weist ein gekrümmt ausgebildetes Verbindungsrohr 7 auf. Die Spurstange 3 erstreckt sich in Fahrzeugquerrichtung 5 und verbindet einen Spurhebel 8 eines Radträgers einer ersten Fahrzeugseite mit dem durch ein weiteres Bauteil verdeckten Spurhebel des gegenüberliegenden Radträgers der anderen Fahrzeugseite. Die Lenkstange 2 erstreckt sich im Wesentlichen in Fahrzeuglängsrichtung 4 und verbindet einen Hebel eines Lenkgetriebes mit einem Lenkhebel 9, welcher einem der beiden Radträger zugeordnet ist, die durch die Spurstange 3 verbunden sind.

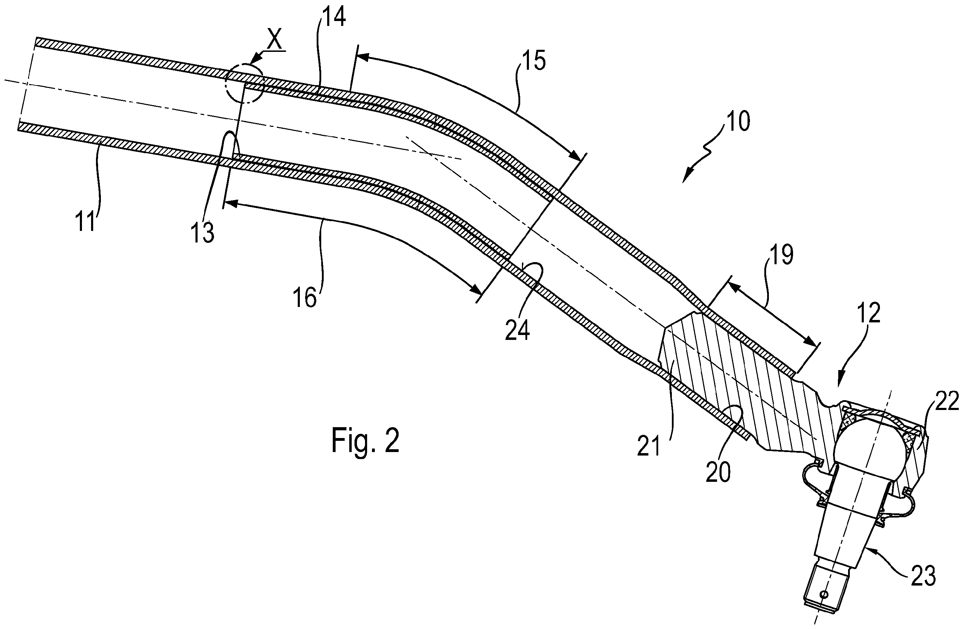

In Fig. 2 ist eine Lenkstange 10 mit einem Verbindungsrohr 11 dargestellt, welches zwei Gelenkanbindungen der Lenkstange 10 miteinander verbindet, wobei hier nur eine Gelenkanbindung 12 dargestellt ist. Die Gelenkanbindung 12 ist an einem Ende des Verbindungsrohres 11 angeordnet. Das Verbindungsrohr 11 ist durch einen kraftschlüssig mit dem Verbindungsrohr verbundenen Rohrabschnitt 13 bereichsweise verstärkt, wobei der Rohrabschnitt 13 mit seiner Außenwandung 14 vollflächig unter Ausbildung einer Pressverbindung an der Innenwandung 24 des Verbindungsrohres 11 anliegt. Die Längserstreckung des Rohrabschnitts 13 ist dabei geringer als die Längserstreckung des Verbindungsrohres 11. Das Verbindungsrohr 11 und der Rohrabschnitt 13 weisen über deren Längserstreckung jeweils eine gleichbleibende kreisringförmige Querschnittsfläche auf, wobei das Verbindungsrohr 11 eine von einer geradlinigen Erstreckung abweichende Erstreckung unter Ausbildung eines Krümmungsabschnitts 15 aufweist. Der Rohrabschnitt 13 ist im Bereich dieses Krümmungsabschnitts 15 des Verbindungsrohres 11 angeordnet. Das Verbindungsrohr 11 und der Rohrabschnitt 13 sind innerhalb eines gemeinsamen, von den Enden des Verbindungsrohres 11 beabstandeten Verbindungsabschnitts 16 radial umlaufend plastisch verformt.

Da der Rohrabschnitt 13 mit seiner Außenwandung 14 vollflächig unter Ausbildung einer Pressverbindung an der Innenwandung 24 des Verbindungsrohres 11 anliegt, entspricht die Länge des Verbindungsabschnitts 16 der Länge des Rohrabschnitts 13. Der Verbindungsabschnitt 16 erstreckt sich einseitig über den Krümmungsabschnitt 15 hinaus in Richtung eines Endes des Verbindungsrohres 11. Demzufolge wird neben einem gekrümmt ausgebildeten Bereich, nämlich dem Krümmungsabschnitt 15, des Verbindungrohres 11 zusätzlich auch ein sich an den gekrümmten Bereich anschließender Bereich mit einer geradlinigen Erstreckung verstärkt. Der Werkstoff des Verbindungsrohres 11 weist eine höhere Streckgrenze auf als der Werkstoff des Rohrabschnitts 13, wobei die Streckgrenze des Verbindungsrohr-Werkstoffes einen Wert von 460 MPa und die des Rohrabschnitt-Werkstoffes einen Wert von 355 MPa aufweist. Die Differenz der beiden Streckgrenzenwerte beträgt demnach 105 MPa.

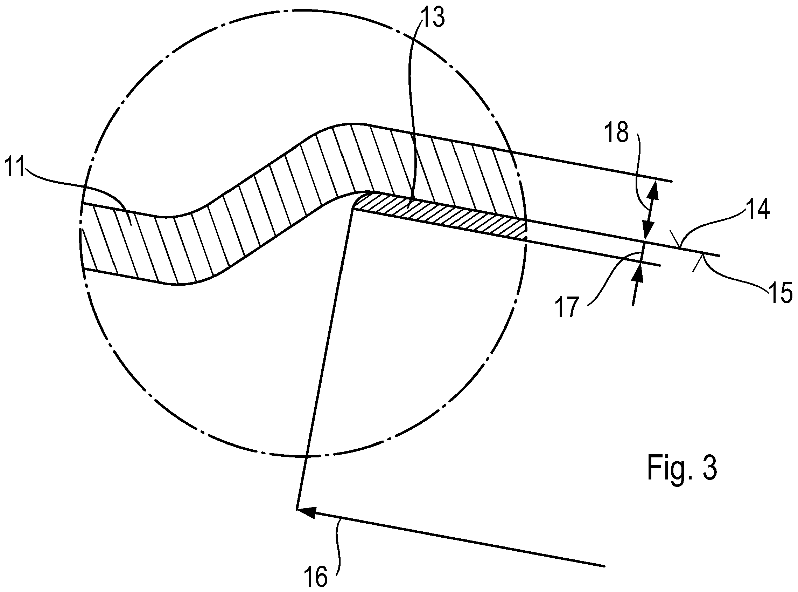

Die Wandstärke 17 des Rohrabschnitts 13 ist geringer als die Wandstärke 18 des Verbindungsrohres 11. Ein Endabschnitt 19 des Verbindungsrohres 11 ist gegenüber dem Durchmesser des Verbindungsrohres 11 im Durchmesser reduziert ausgebildet. Das Verbindungsrohr 11 weist zu dem im Durchmesser reduzierten Endabschnitt 19 einen umlaufend konisch ausgebildeten Übergang auf. Der Verbindungsabschnitt 16 und der Endabschnitt 19 sind voneinander beabstandet angeordnet. Der im Durchmesser reduzierte Endabschnitt 19 weist ein nicht gesondert dargestelltes Rillenprofil 20 mit in Axialrichtung gleichmäßig zueinander beabstandeten Rillen auf. Die Gelenkanbindung ist als ein Radialkugelgelenk 12 mit einem Schaft 21 ausgebildet. Der Schaft 21 weist ein Rillenprofil auf, welches formkorrespondierend zu dem Rillenprofil 20 des Endabschnitts 19 ausgebildet ist. Der Schaft 21 ist von dem Endabschnitt 19 umschließend aufgenommen und mit diesem durch Warmeinschlagen verbunden. Das Radialkugelgelenk 12 weist ein Gehäuse 22 auf, in dem ein kugelförmiger Endabschnitt eines Kugelzapfens 23 angeordnet ist, wobei sich der Kugelzapfen 23 im Wesentlichen rechtwinklig zu der Erstreckungsrichtung von Endabschnitt 19 und Schaft 21 erstreckt. Das Verbindungsrohr 11 und der Rohrabschnitt 13 sind als nahtlos kaltgezogene Präzisionsstahlrohre nach EN 10305-1 ausgebildet, die einer Wärmebehandlung durch Normalglühen unterzogen wurden. Wie aus Fig. 3 deutlich wird, ist der Übergang von den nicht plastisch verformten Abschnitten des Verbindungsrohres 11 zu dem Verbindungsabschnitt 16 des Verbindungsrohres 11 umlaufend konisch ausgebildet.

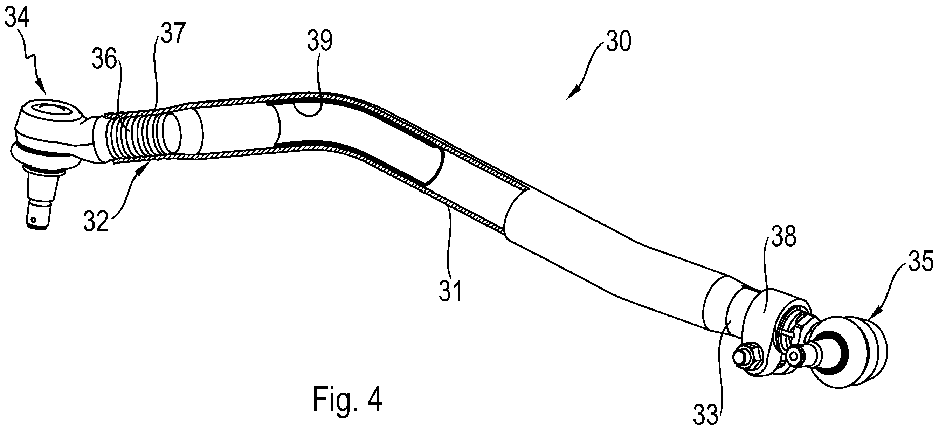

Fig. 4 zeigt eine Lenkstange 30 aufweisend ein Verbindungsrohr 31, wobei die Endabschnitte 32, 33 des Verbindungsrohres 31 jeweils Teile von Gelenkanbindungen 34, 35 aufnehmen. Die Gelenkanbindungen sind als Radialkugelgelenke 34, 35 ausgebildet, wobei jeweils ein Schaft 36 des Radialkugelgelenks 34, 35 von dem zugeordneten Endabschnitt 32, 33 des Verbindungsrohres 31 aufgenommen wird. Der Schaft 36 und der Endabschnitt 32 sind über ein Rillenprofil 37 mit in axialer Richtung von Schaft 36 und Endabschnitt 32 parallel angeordneten und gleichmäßig zueinander beabstandeten Rillen unlösbar miteinander verbunden. Eines der beiden Radialkugelgelenke 35 ist in axialer Richtung des Endabschnitts 33 verlagerbar mit dem Verbindungsrohr 31 verbunden, um eine Feinjustierung des Abstands der Radialkugelgelenke 34, 35 zueinander zu ermöglichen. Die Feinjustierung erfolgt dabei über eine Gewindeanordnung, die eine axiale Verlagerung des nicht sichtbaren Schaftes relativ zu dem Endabschnitt 33 des Verbindungsrohres 31 ermöglicht. Nach der Feinjustierung kann die eingestellte Position des Radialkugelgelenks 35 relativ zu dem Verbindungsrohr 31 durch eine den Endabschnitt 33 des Verbindungsrohres 31 umschließende Schelle 38 gesichert werden. Der Endabschnitt 33 des Verbindungsrohres 31 weist zwei Längsschlitze auf, um eine Nachgiebigkeit zu schaffen und somit eine Klemmung durch die Schelle 38 zu ermöglichen. Das Verbindungsrohr 31 weist eine von einer geradlinigen Erstreckung abweichende Erstreckung auf. Das Verbindungsrohr 31 ist durch einen kraftschlüssig mit dem Verbindungsrohr 31 verbundenen Rohrabschnitt 39 bereichsweise verstärkt, wobei der Rohrabschnitt 39 mit seiner Außenwandung vollflächig unter Ausbildung einer Pressverbindung an der Innenwandung des Verbindungsrohres 31 anliegt.

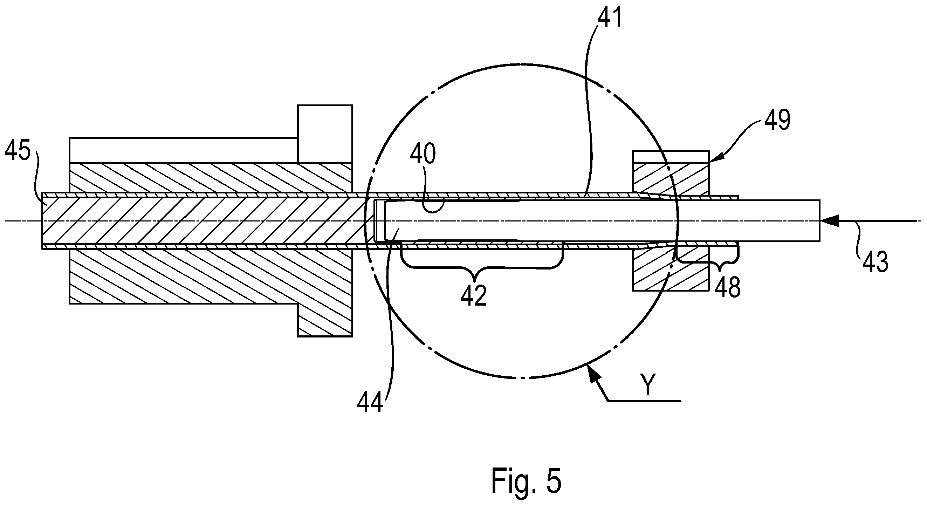

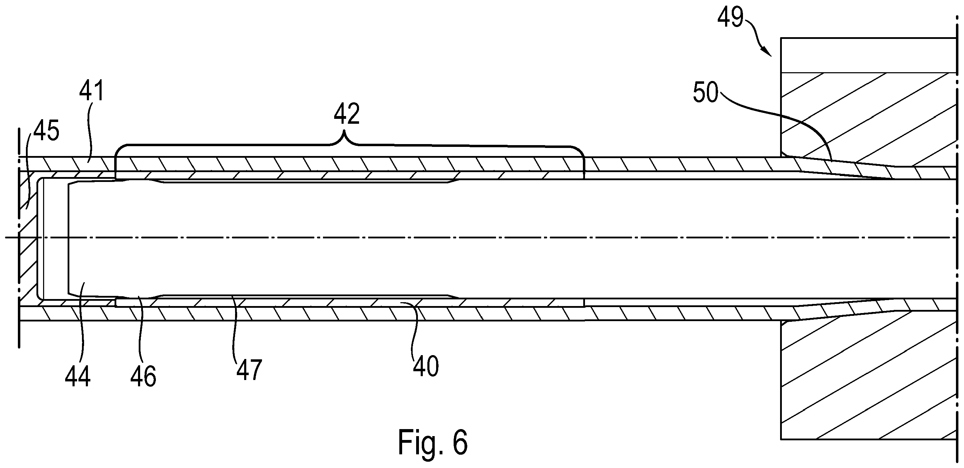

Fig. 5 zeigt ein Verfahren zur Herstellung eines Verbindungsrohres 41 einer Lenkstange, wobei zunächst ein Rohrhalbzeug eines Rohrabschnitts 40 innerhalb eines Rohrhalbzeugs des Verbindungsrohres 41 positioniert wird und anschließend beide Rohrhalbzeuge innerhalb eines Verbindungsabschnitts 42 durch einen sich in der gemeinsamen Axialrichtung 43 der beiden Rohrhalbzeuge bewegenden Dorn 44 mit einem Übermaß aufgeweitet werden. Auf diese Weise wird eine kraftschlüssige Pressverbindung zwischen den beiden Fügepartnern geschaffen. Bei den Rohrhalbzeugen handelt es sich um nahtlos kaltgezogene Stahlrohre mit geradliniger Erstreckung, die jeweils auf die erforderliche Einsatzlänge zugeschnitten sind. Das Positionieren des Rohrhalbzeugs des Rohrabschnitts 40 in dem Rohrhalbzeug des Verbindungsrohres 41 erfolgt durch einen innerhalb des Rohrhalbzeugs des Verbindungsrohres 41 verschiebbaren Gegenhalter 45, welcher als Anschlag wirkt und in Fig. 6 zu erkennen ist. Zwischen dem Rohrhalbzeug des Rohrabschnitts 40 und dem Rohrhalbzeug des Verbindungsrohres 41 besteht vorzugsweise eine Spielpassung mit einem relativ geringen Spiel, damit beide Fügepartner ohne großen Kraftaufwand relativ zueinander bewegt werden können.

Die Aufweitung des Rohrhalbzeugs des Rohrabschnitts 40 und das Rohrhalbzeugs des Verbindungsrohres 41 innerhalb des Verbindungsabschnitts 42 durch den sich in der gemeinsamen Axialrichtung 43 der beiden Rohrhalbzeuge 40, 41 bewegenden Dorn 44 mit einem Übermaß erfolgt vorzugsweise in Axialrichtung 43 fortschreitend. Sein Übermaß weist der Dorn 44 nicht über dessen gesamte Längserstreckung in Axialrichtung 43 auf, sondern lediglich in einen relativ kleinen Bereich seiner Längserstreckung, welcher als ringförmig umlaufende Formwulst 46 ausgebildet ist. Auf diese Weise kann die für das Aufweiten erforderliche Umformkraft relativ gering gehalten werden. Über seine restliche Längserstreckung weist der Dorn 44 umfangsseitig im Wesentlichen eine umlaufende Freimachung 47 zur Verminderung der Reibung zwischen dem Dorn 44 und der Innenwandung des Rohrhalbzeugs des Rohrabschnitts 40 auf. Die Aufweitung erfolgt bei innenliegendem Rohrhalbzeug des Rohrabschnitts 40 derart, dass das Rohrhalbzeug des Rohrabschnitts 40 und das Rohrhalbzeug des Verbindungsrohres 41 innerhalb des Verbindungsabschnitts 42 eine bleibende, radial umlaufende plastische Verformung verbunden mit einer geringfügigen Erhöhung des jeweiligen Außendurchmessers erfahren. Durch diese Vorgehensweise wird erreicht, dass im Falle eines Versagens der kraftschlüssigen Pressverbindung zwischen den Fügepartnern eine formschlüssige Lagesicherung wirkt, welche nach der Fertigstellung des Verbindungsrohres 41 den Rohrabschnitt 40 innerhalb des Verbindungsrohres 41 in Axialrichtung 43 in Position hält.

Ein Endabschnitt 48 des Verbindungsrohres 40 wird im Durchmesser reduziert, wobei die Durchmesserreduzierung durch eine sich in Axialrichtung 43 bewegende Matrize 49 mit einem konischen Einlauf 50 erfolgt, welche Matrize 49 sich über den Außenumfang des Verbindungsrohres 41 schiebt. Die Matrize 49 weist auf ihrer dem Verbindungsrohr 41 zugewandten Seite einen konischen Einlauf 50 mit einem Öffnungswinkel von 14 Grad auf. Das Aufschieben der Matrize 49 erfolgt mit in dem Verbindungsrohr 40 eingetauchten Dorn 44, wobei der Dorn 44 in dem Bereich, in dem sich die Matrize 49 auf das Verbindungsrohr 41 aufschiebt, einen Außendurchmesser aufweist, der dem Innendurchmesser des im Durchmesser reduzierten Endabschnitts 48 entspricht. Auf diese Weise kann einem Ausknicken des Verbindungsrohres 41 während des Aufschiebens der Matrize 49 entgegengewirkt werden. Die Durchmesserreduzierung des Verbindungsrohres 41 erfolgt in derselben Aufspannung wie die Aufweitung des Rohrhalbzeugs des Rohrabschnitts 40 und des Rohrhalbzeugs des Verbindungsrohres 41. Das Verbindungsrohr 41 weist über dessen Längserstreckung eine geradlinige Erstreckung auf.

### Bezugszeichen

- 1: Vorderachse
- 2: Lenkstange
- 3: Spurstange
- 4: Fahrzeuglängsrichtung
- 5: Fahrzeugquerrichtung
- 6: Verbindungsrohr der Spurstange
- 7: Verbindungsrohr der Lenkstange
- 8: Spurhebel
- 9: Lenkhebel

- 10: Lenkstange
- 11: Verbindungsrohr
- 12: Gelenkanbindung
- 13: Rohrabschnitt
- 14: Außenwandung des Rohrabschnitts
- 15: Krümmungsabschnitt
- 16 17: Verbindungsabschnitt Wandstärke des Rohrabschnitts
- 18: Wandstärke des Verbindungsrohres
- 19: Endabschnitt
- 20: Rillenprofil
- 21: Schaft
- 22: Gehäuse
- 23: Kugelzapfen
- 24: Innenwandung des Verbindungsrohres

- 30: Lenkstange
- 31: Verbindungsrohr
- 32: Endabschnitt
- 33: Endabschnitt
- 34: Gelenkanbindung, Radialkugelgelenk
- 35: Gelenkanbindung, Radialkugelgelenk
- 36: Schaft
- 37: Rillenprofil
- 38: Schelle
- 39: Röhrabschnitt

- 40: Rohrabschnitt
- 41: Verbindungsrohr
- 42: Verbindungsabschnitt
- 43: Axialrichtung
- 44: Dorn
- 45: Gegenhalter
- 46: Formwulst
- 47: Freimachung
- 48: Endabschnitt
- 49: Matrize
- 50: konischer Einlauf

## Patentansprüche

1. Lenkstange (10, 30) oder Spurstange aufweisend ein einteiliges Verbindungsrohr (11, 31, 41), wobei die Endabschnitte (19, 32, 33) des Verbindungsrohres (11, 31, 41) jeweils Teile von Gelenkanbindungen (12, 34, 35) aufnehmen, **dadurch gekennzeichnet, dass** das Verbindungsrohr (11, 31,41) durch zumindest einen kraftschlüssig mit dem Verbindungsrohr (11, 31, 41) verbundenen Rohrabschnitt (13, 39, 40) bereichsweise verstärkt ist, wobei der Rohrabschnitt (13, 39, 40) mit seiner Außenwandung (14) oder mit seiner Innenwandung vollflächig unter Ausbildung einer Pressverbindung an einer Wandung (24) des Verbindungsrohres (11,31, 41) anliegt, wobei das Verbindungsrohr (11, 31, 41) innerhalb eines gemeinsamen, von den Enden des Verbindungsrohres (11, 31, 41) beabstandeten Verbindungsabschnitts (16, 42) radial umlaufend plastisch verformt ist, wobei das Verbindungsrohr (11, 31, 41) in dem Verbindungsabschnitt (16, 42) gegenüber den nicht radial plastisch verformten Abschnitten einen vergrößerten Innen- und Außendurchmesser oder einen reduzierten Innen- und Außendurchmesser aufweist.

2. Lenkstange (10, 30) oder Spurstange nach Anspruch 1, **dadurch gekennzeichnet, dass** das Verbindungsrohr (41) über dessen Längserstreckung eine geradlinige Erstreckung aufweist.

3. Lenkstange (10, 30) oder Spurstange nach Anspruch 1, **dadurch gekennzeichnet, dass** das Verbindungsrohr (11, 31) eine von einer geradlinigen Erstreckung abweichende Erstreckung aufweist.

4. Lenkstange (10, 30) oder Spurstange nach Anspruch 3, **dadurch gekennzeichnet, dass** der Rohrabschnitt (13, 39) im Bereich eines Krümmungsabschnitts (15) des Verbindungsrohres (11,31) angeordnet ist.

5. Lenkstange (10, 30) oder Spurstange nach einem der Ansprüche 1 bis 4, **dadurch gekennzeichnet, dass** der Rohrabschnitt (13, 39, 40) innerhalb des gemeinsamen, von den Enden des Verbindungsrohres (11, 31, 41) beabstandeten Verbindungsabschnitts (16, 42) radial umlaufend plastisch verformt ist.

6. Lenkstange (10, 30) oder Spurstange nach einem der vorhergehenden Ansprüche, **dadurch gekennzeichnet, dass** die Werkstoffe des Verbindungsrohres (11, 31, 41) und des Rohrabschnitts (13, 39, 40) unterschiedliche Fließgrenzen aufweisen.

7. Lenkstange (10, 30) oder Spurstange nach Anspruch 6, **dadurch gekennzeichnet, dass** der Werkstoff des Verbindungsrohres (11, 31, 41) eine höhere Streckgrenze aufweist als der Werkstoff des Rohrabschnitts (13, 39, 40).

8. Lenkstange (10, 30) oder Spurstange nach einem der vorhergehenden Ansprüche, **dadurch gekennzeichnet, dass** der Rohrabschnitt (13, 39, 40) eine geringere Wandstärke (17) aufweist als das Verbindungsrohr (11, 31, 41).

9. Lenkstange (10, 30) oder Spurstange nach einem der vorhergehenden Ansprüche, **dadurch gekennzeichnet, dass** zumindest ein Endabschnitt (19, 32, 33, 48) des Verbindungsrohres (11, 31, 41) im Durchmesser reduziert ausgebildet ist.

10. Lenkstange (10, 30) oder Spurstange nach einem der vorhergehenden Ansprüche, **dadurch gekennzeichnet, dass** das Verbindungsrohr (11, 31, 41) und/oder der Rohrabschnitt (13, 39, 40) als nahtlos kaltgezogene Stahlrohre ausgebildet sind.

11. Lenkstange (10, 30) oder Spurstange nach einem der Ansprüche 1 bis 9, **dadurch gekennzeichnet, dass** das Verbindungsrohr (11, 31, 41) und/oder der Rohrabschnitt (13, 39, 40) als längsnahtgeschweißte Stahlrohre ausgebildet sind.

12. Verfahren zur Herstellung einer Lenkstange (10, 30) oder Spurstange nach einem der Ansprüche 1 bis 11, wobei zunächst ein Rohrhalbzeug des Rohrabschnitts (13, 39, 40) innerhalb eines Rohrhalbzeugs des Verbindungsrohres (11, 31, 41) positioniert wird und anschließend beide Rohrhalbzeuge innerhalb des Verbindungsabschnitts (16, 42) durch einen sich in der gemeinsamen Axialrichtung der beiden Rohrhalbzeuge bewegenden Dorn (44) mit einem Übermaß aufgeweitet werden.

13. Verfahren nach Anspruch 12, **dadurch gekennzeichnet, dass** zumindest ein Endabschnitt (19, 32, 33, 48) des Verbindungsrohres (11, 31, 41) im Durchmesser reduziert wird, wobei die Durchmesserreduzierung durch eine sich in Axialrichtung des Verbindungsrohres (11, 31, 41) bewegende Matrize (49) mit einem konischen Einlauf (50) erfolgt, welche Matrize (49) sich über den Außenumfang des Verbindungsrohres (11, 31, 41) schiebt.

## Claims

1. Steering rod (10, 30) or track rod having a one-piece connecting tube (11, 31, 41), wherein the end portions (19, 32, 33) of the connecting tube (11, 31, 41) each receive parts of articulated connections (12, 34, 35), **characterized in that** the connecting tube (11, 31, 41) is reinforced in regions by at least one tube portion (13, 39, 40) connected to the connecting tube (11, 31, 41) in a force-fitting manner, wherein the outer wall (14) or the inner wall of the tube portion (13, 39, 40) lies over the full surface area against a wall (24) of the connecting tube (11, 31, 41), forming a press connection, wherein the connecting tube (11, 31, 41) is plastically deformed radially circumferentially within a common connecting portion (16, 42) which is spaced apart from the ends of the connecting tube (11, 31, 41), wherein, in the connecting portion (16, 42), the connecting tube (11, 31, 41) has an increased inside and outside diameter or a reduced inside and outside diameter in comparison to the portions which are not plastically deformed radially.

2. Steering rod (10, 30) or track rod according to Claim 1, **characterized in that** the connecting tube (41) has a rectilinear extent over its longitudinal extent.

3. Steering rod (10, 30) or track rod according to Claim 1, **characterized in that** the connecting tube (11, 31) has an extent differing from a rectilinear extent.

4. Steering rod (10, 30) or track rod according to Claim 3, **characterized in that** the tube portion (13, 39) is arranged in the region of a curvature portion (15) of the connecting tube (11, 31).

5. Steering rod (10, 30) or track rod according to one of Claims 1 to 4, **characterized in that** the tube portion (13, 39, 40) is plastically deformed radially circumferentially within the common connecting portion (16, 42) which is spaced apart from the ends of the connecting tube (11, 31, 41).

6. Steering rod (10, 30) or track rod according to one of the preceding claims, **characterized in that** the materials of the connecting tube (11, 31, 41) and of the tube portion (13, 39, 40) have different yield points.

7. Steering rod (10, 30) or track rod according to Claim 6, **characterized in that** the material of the connecting tube (11, 31, 41) has a higher yield strength than the material of the tube portion (13, 39, 40).

8. Steering rod (10, 30) or track rod according to one of the preceding claims, **characterized in that** the tube portion (13, 39, 40) has a smaller wall thickness (17) than the connecting tube (11, 31, 41).

9. Steering rod (10, 30) or track rod according to one of the preceding claims, **characterized in that** at least one end portion (19, 32, 33, 48) of the connecting tube (11, 31, 41) is reduced in diameter.

10. Steering rod (10, 30) or track rod according to one of the preceding claims, **characterized in that** the connecting tube (11, 31, 41) and/or the tube portion (13, 39, 40) are in the form of seamlessly cold-drawn steel tubes.

11. Steering rod (10, 30) or track rod according to one of Claims 1 to 9, **characterized in that** the connecting tube (11, 31, 41) and/or the tube portion (13, 39, 40) are/is in the form of longitudinally welded steel tubes.

12. Method for producing a steering rod (10, 30) or track rod according to one of Claims 1 to 11, wherein first of all a tubular semi-finished product of the tube portion (13, 39, 40) is positioned within a tubular semi-finished product of the connecting tube (11, 31, 41) and then the two tubular semi-finished products are widened within the connecting portion (16, 42) by an oversized mandrel (44) moving in the common axial direction of the two tubular semi-finished products.

13. Method according to Claim 12, **characterized in that** at least one end portion (19, 32, 33, 48) of the connecting tube (11, 31, 41) is reduced in diameter, wherein the reduction in diameter takes place by means of a die (49) which moves in the axial direction of the connecting tube (11, 31, 41) and has a conical inlet (50), which die (49) is pushed over the outer circumference of the connecting tube (11, 31, 41).

## Revendications

1. Bielle de direction (10, 30) ou barre d'accouplement comprenant un tube de liaison monobloc (11, 31, 41), les parties d'extrémité (19, 32, 33) du tube de liaison (11, 31, 41) recevant chacune des éléments de liaisons articulées (12, 34, 35), **caractérisée en ce que** le tube de liaison (11, 31, 41) est renforcé par endroits par au moins une partie de tube (13, 39, 40) reliée en force au tube de liaison (11, 31, 41), la partie de tube (13, 39, 40) venant en appui, par sa paroi extérieure (14) ou sa paroi intérieure, sur toute la surface sur une paroi (24) du tube de liaison (11, 31, 41) en formant une liaison serrée, le tube de liaison (11, 31, 41) étant déformé de manière plastique radialement dans la direction périphérique dans une partie de liaison commune (16, 42) espacée des extrémités du tube de liaison (11, 31, 41), le tube de liaison (11, 31, 41) ayant dans la partie de liaison (16, 42) un diamètre intérieur et un diamètre extérieur élargis ou un diamètre intérieur et un diamètre extérieur réduits par rapport aux parties non déformées de manière plastique radialement.

2. Bielle de direction (10, 30) ou barre d'accouplement selon la revendication 1, **caractérisée en ce que** le tube de liaison (41) présente une extension rectiligne sur son extension longitudinale.

3. Bielle de direction (10, 30) ou barre d'accouplement selon la revendication 1, **caractérisée en ce que** le tube de liaison (11, 31) présente une extension s'écartant d'une extension rectiligne.

4. Bielle de direction (10, 30) ou barre d'accouplement selon la revendication 3, **caractérisée en ce que** la partie de tube (13, 39) est disposée dans la région d'une partie incurvée (15) du tube de liaison (11, 31).

5. Bielle de direction (10, 30) ou barre d'accouplement selon l'une des revendications 1 à 4, **caractérisée en ce que** la partie de tube (13, 39, 40) située à l'intérieur de la partie de liaison commune (16, 42), espacée des extrémités du tube de liaison (11, 31, 41), est déformée de manière plastique radialement dans la direction périphérique.

6. Bielle de direction (10, 30) ou barre d'accouplement selon l'une des revendications précédentes, **caractérisé en ce que** les matériaux du tube de liaison (11, 31, 41) et de la partie de tube (13, 39, 40) ont des limites d'écoulement différentes.

7. Bielle de direction (10, 30) ou barre d'accouplement selon la revendication 6, **caractérisée en ce que** le matériau du tube de liaison (11, 31, 41) a une limite d'élasticité supérieure à celle du matériau de la partie de tube (13, 39, 40).

8. Bielle de direction (10, 30) ou barre d'accouplement selon l'une des revendications précédentes, **caractérisée en ce que** la partie de tube (13, 39, 40) a une épaisseur de paroi (17) inférieure à celle du tube de liaison (11, 31, 41).

9. Bielle de direction (10, 30) ou barre d'accouplement selon l'une des revendications précédentes, **caractérisée en ce qu'**au moins une partie d'extrémité (19, 32, 33, 48) du tube de liaison (11, 31, 41) est conçue avec un diamètre réduit.

10. Bielle de direction (10, 30) ou barre d'accouplement selon l'une des revendications précédentes, **caractérisée en ce que** le tube de liaison (11, 31, 41) et/ou la partie de tube (13, 39, 40) sont conçus sous la forme de tubes en acier étirés à froid sans soudure.

11. Bielle de direction (10, 30) ou barre d'accouplement selon l'une des revendications 1 à 9, **caractérisée en ce que** le tube de liaison (11, 31, 41) et/ou la partie de tube (13, 39, 40) sont conçus comme des tubes en acier soudés longitudinalement.

12. Procédé de fabrication d'une bielle de direction (10, 30) ou d'une barre d'accouplement selon l'une des revendications 1 à 11, un tube semi-fini de la partie de tube (13, 39, 40) étant d'abord positionné dans un tube semi-fini du tube de liaison (11, 31, 41), puis les tubes semi-finis pouvant être élargis avec un surdimensionnement à l'intérieur de la partie de liaison (16, 42) par un dôme (44) qui se déplace dans la direction axiale commune des deux tubes semi-finis.

13. Procédé selon la revendication 12, **caractérisé en ce qu'**au moins une partie d'extrémité (19, 32, 33, 48) du tube de liaison (11, 31, 41) présente un diamètre réduit,
la réduction de diamètre étant effectuée par une matrice (49), pourvue d'une entrée conique (50), qui se déplace dans la direction axiale du tube de liaison (11, 31, 41), laquelle matrice (49) coulisse sur la périphérie extérieure du tube de liaison (11, 31, 41).
